(19) Europäisches Patentamt
European Patent Office
Office européen des brevets

(11) **EP 1 506 973 B1**

(12) **EUROPÄISCHE PATENTSCHRIFT**

(45) Veröffentlichungstag und Bekanntmachung des Hinweises auf die Patenterteilung:
**11.12.2013 Patentblatt 2013/50**

(51) Int Cl.:
**C08B 15/00** (2006.01)  **C04B 40/00** (2006.01)
**C04B 24/38** (2006.01)  **C04B 28/02** (2006.01)

(21) Anmeldenummer: **04018227.1**

(22) Anmeldetag: **02.08.2004**

(54) **Verwendung von irreversible vernetzten Cellulosederivation in Baustoffsystemen sowie ein Verfahren zur Zementextrusion unter Einsatz dieser Additive**

Use of irreverrsibly crosslinked cellulose derivatives in building materials and a process for the extrusion of cement using these additives

Utilisation des dérivés de cellulose réticulées irréversiblement dans les matériaux de construction et un procédé d'extrusion du ciment utilisant ces additifs

(84) Benannte Vertragsstaaten:
**AT BE BG CH CY CZ DE DK EE ES FI FR GB GR HU IE IT LI LU MC NL PL PT RO SE SI SK TR**

(30) Priorität: **12.08.2003 DE 10337011**

(43) Veröffentlichungstag der Anmeldung:
**16.02.2005 Patentblatt 2005/07**

(73) Patentinhaber: **Dow Global Technologies LLC Midland, MI 48674 (US)**

(72) Erfinder:
- **Schlesiger, Hartwig, Dr.**
  **29683 Bad Fallingbostel (DE)**
- **Bayer, Roland, Dr.**
  **29664 Walsrode (DE)**
- **Höhl, Frank**
  **29643 Neuenkirchen (DE)**
- **Kull, Arne Henning, Dr.**
  **29699 Bomlitz (DE)**

- **Engelhardt, Jürgen, Dr.**
  **29683 Bad Fallingbostel (DE)**
- **Kressdorf, Burkhard, Dr.**
  **29683 Bad Fallingbostel (DE)**
- **Pannek, Jörn, Dr.**
  **29683 Bad Fallingbostel (DE)**

(74) Vertreter: **polypatent**
**Postfach 40 02 43**
**51410 Bergisch Gladbach (DE)**

(56) Entgegenhaltungen:
**EP-A- 1 384 727  US-A- 4 321 367**

- **PATENT ABSTRACTS OF JAPAN Bd. 1998, Nr. 01, 30. Januar 1998 (1998-01-30) & JP 9 249438 A (SHIN ETSU CHEM CO LTD), 22. September 1997 (1997-09-22)**
- **PATENT ABSTRACTS OF JAPAN Bd. 1998, Nr. 05, 30. April 1998 (1998-04-30) & JP 10 017347 A (SHIN ETSU CHEM CO LTD), 20. Januar 1998 (1998-01-20)**

**EP 1 506 973 B1**

**Beschreibung**

Die Erfindung betrifft die Verwendung von irreversibel vernetzten Cellulosederivaten als Additive für die Extrusion von Baustoffsystemen sowie Verfahren zur Zementextrusion unter Einsatz dieser Additive.

Cellulosederivate finden aufgrund ihrer hervorragenden Eigenschaften und ihrer physiologischen Unbedenklichkeit vielseitig Anwendung, beispielsweise als Verdicker, Kleber, Binde- und Dispergiermittel, Wasserrückhaltemittel, Schutzkolloide, Stabilisatoren sowie als Suspendier- Emulgier- und Filmbildemittel.

Ein Anwendungsgebiet für Cellulosederivate ist die Extrusion von Baustoffsystemen.

Die Extrusion von Baustoffensystemen wie zementären Systemen und faserhaltigen zementären Systemen wird breit eingesetzt für die Herstellung von Platten und Profilen für Wände, Dächer, Böden usw. Im weiteren wird diese Vorgehensweise vereinfacht als Zementextrusion bezeichnet.

Die Zementextrusion ist ein Verfahren, pastöse zementhaltige Mischungen durch Pressen durch einen Düsenmund in beliebige Profile zu formen. Die auf diese Weise erhaltenen Elemente lassen sich vielfältig einsetzen, insbesondere in Bauanwendungen. Hier können sie zum einen Zementmassen ersetzen, die bisher gegossen wurden, andererseits sind aber auch Profilformen zugänglich, die durch das konventionelle Verfahren des Gießens nicht zugänglich sind. Die Beispiele für extrudierte Bauelemente reichen von kleinen Eckprofilen, die nur eine Breite von wenigen Zentimetern haben, bis zu großen Bauplatten, die eine Breite von 60 cm und theoretisch beliebige Länge haben können. Extrudierte Zementmassen enthalten als Bestandteile grundsätzlich Zement als Bindemittel, eventuell auch weitere Bindemittel, ferner Zuschläge (Sande) und/oder Leichtzuschläge sowie Celluloseether, insbesondere Methylcellulose, als Wasserrückhalte-, Plastifizier- und Gleitmittel. Dieses Wasserrückhalte-, Plastifizier und Gleitmittel wird im weiteren auch einfach als Additiv bezeichnet. Durch ihr Wasserrückhaltevermögen unterbinden solche Additive auch die Phasensegregation zwischen flüssiger und fester Phase. Die Einsatzmenge der Additive liegt im allgemeinen zwischen 0,3 und 2,5 %. Häufig werden auch natürliche und/oder synthetische Fasern zugesetzt.

Nach wie vor bringt die Zementextrusion eine Reihe von Nachteilen mit sich, welche ihren kommerziellen Einsatz begrenzen.

Dem Fachmann ist bekannt, dass als Additive zur Zementextrusion Cellulosederivate, insbesondere Derivate der Methylcellulose wie Methylhydroxyethylcellulose (MHEC) oder Methylhydroxypropylcellulose (MHPC) eingesetzt werden. Diese zeigen jedoch bei weitem nicht das gewünschte Eigenschaftsprofil, insbesondere MHPC verliert bei höheren Temperaturen seine Wirksamkeit, alle Cellulosederivate führen nach wie vor zu einem hohen Extrusiondruck und zu einer rauen, unebenen Oberfläche des Extrudats.

Irreversibel vernetzte Cellulosederivate sind bereits bekannt; so beschreibt bereits die GB-A-514,917 ein Verfahren zur Herstellung wasserlöslicher Celluloseether welche mit einem bifunktionellen Reagenz vernetzt werden. Ziel der GB-A-514,917 war es, Celluloseether herzustellen, die eine ungewöhnlich hohe Viskosität in Wasser aufweisen. Bevorzugt zeigen die Produkte einen Viskositätsanstieg von 400 %.

Die US-A-4,321,367 beschreibt ebenfalls ein Verfahren zur Herstellung vernetzter Celluloseether, erneut mit dem Ziel Produkte mit erhöhter Viskosität in wässriger Lösung bereitzustellen. Bevorzugt wird die Viskosität einer 2 Gew.-%igen Lösung um mindestens 50 % angehoben, in der am meisten bevorzugten Variante wird die Viskosität einer 2 Gew.-%igen Lösung um mindestens 100 % angehoben.

Die EP 1384727 A1 beschreibt Celluloseether mit gel-artigen rheologischen Eigenschaften in wässriger Lösung, die dadurch erhältlich sind, dass man Cellulose mit wässriger Alkalihydroxid-Lösung in Gegenwart eines Suspensionsmittels alkalisiert, die alkalisierte Cellulose mit einem oder mehreren Alkylenoxiden reagieren lässt, dann mit einem im Suspensionsmittel enthaltenen Alkylhalogenid umsetzt, anschließend oder gleichzeitig die alkalisierte Cellulose mit einem Vernetzungsmittel in einer Menge von 0,0001 bis 0,05 eq, wobei die Einheit "eq" für das molare Verhältnis des Vernetzungsmittels relativ zur Anhydroglucoseeinheit (AGU) der eingesetzten Cellulose steht, umsetzt und nach gegebenenfalls weiterer Zugabe von Alkalihydroxid und/oder Alkylierungsmittel das erhaltene irreversibel vernetzte Cellulosederivat aus dem Reaktionsgemisch abtrennt, gegebenenfalls reinigt und trocknet.

US-A 4,321,367 beschreibt die Herstellung von vernetzten Polysaccharidethern, wobei gleichzeitig mit oder nach der Veretherung mit einem Methanalkylen oder - alkyliden mit mindestens 2 Halogensubstituenten vernetzt wird.

JP 9249438 offenbart die Verwendung von Cellulosederivaten als Additive für die Extrusion von Baustoffsystemen. Dabei handelt es sich nicht um irreversibel vernetzte Celluloseetherderivate.

In diesen Schriften werden irrreversibel vernetzte Cellulosederivate beschrieben, jedoch wird in keiner Weise der Bereich offengelegt, in welchem durch die irreversible Vernetzung gelartige rheologische Eigenschaften erhalten werden. Auch legt keine dieser Schriften die Verwendung solcher Produkte in der Zementextrusion nahe oder beschreibt gar die für solche Produkte geeigneten Substitutionsgrade.

Nach wie vor ist jedoch kein Additiv oder Compound verschiedener Additive in der Lage die bei der Zementextrusion auftretenden Probleme zu lösen.

Hier besteht weiterhin dringender Bedarf verbesserte Additive zur Verfügung zu stellen, welche bei hohen Temperaturen Wasserrückhaltevermögen zeigen,

den Extrusionsdruck bei der Zementextrusion absenken,
die Oberflächenqualität des Extrudats erhöhen,
eine hohe Austragsgeschwindigkeit erlauben,
und die Formstabilität des Extrudats erhalten.

Aufgabe der vorliegenden Erfindung war die Bereitstellung verbesserter Additive für die Extrusion von Baustoffen, die die angegebenen Probleme vermeiden.

Überraschenderweise konnte nun gefunden werden, dass Cellulosederivate mit gel-artigen rheologischen Eigenschaften diese Nachteile abstellen können, wobei die Vorteile, welche bereits bei herkömmlichen Cellulosederivaten gegeben sind, erhalten werden.

Gegenstand der Erfindung ist daher die Verwendung von irreversibel vernetzten Cellulosederivaten als Additive für die Extrusion von Baustoffsystemen.

Im Folgenden wird beschrieben, wodurch gelartige rheologische Eigenschaften charakterisiert sind:

Herkömmliche kommerziell erhältliche Cellulosederivate, die in Wasser löslich sind, wie z.B. Methylhydroxyethylcellulose, Methylhydroxypropylcellulose und Hydroxyethylcellulose zeigen ein charakteristisches rheologisches Profil, welches sich an Hand von Materialfunktionen der wässrigen Lösung des Cellulosederivats beschreiben lässt. Wässrige Lösung bedeutet hierbei ein System, das Wasser, Cellulosederivat und, soweit vorhanden, Salze und Begleitstoffe aus dem Cellulosederivat und dem verwendeten Wasser, z.B. Leitungswasser, enthält.

Als Materialfunktionen werden üblicherweise die Viskosität $\eta$ als Funktion der Schergeschwindigkeit $\dot{\gamma}$ zur Beschreibung der Fließeigenschaften diskutiert, sowie der Speichermodul G' und der Verlustmodul G" jeweils als Funktion der Kreisfrequenz $\omega$ zur Beschreibung der linear-viskoelastischen Eigenschaften.

Die hier verwendeten Symbole folgen den Empfehlungen der Veröffentlichung: C. L. Sieglaff: "Proposed Nomenclature for Steady Shear Flow and Linear Viscoelastic Behavior", Transactions of the Society of Rheology 20:2 (1976) 311-317.

Im Falle der Viskosität wird in der Regel nicht die gesamte Funktion $\eta(\dot{\gamma})$ angegeben, sondern ein repräsentativer Viskositätswert, der unter definierten Bedingungen bezüglich der Konzentration des Cellulosederivats in der wässrigen Lösung, der Temperatur und der Schergeschwindigkeit bzw. des verwendeten Messgerätes und der Geräteeinstellungen bestimmt wird. Dieses Vorgehen ist dem Fachmann gut bekannt. Allgemein bekannt ist auch, dass in den meisten Fällen die Viskosität der wässrigen Lösung eines Cellulosederivats mit steigender Schergeschwindigkeit abnimmt, die wässrigen Lösungen somit ein pseudoplastisches Fließverhalten aufweisen.

Die linear-viskoelastischen Eigenschaften werden durch Messungen in einer oszillierenden Scherströmung bei kleiner Amplitude und variabler Kreisfrequenz ermittelt. Die Werte für G' und G" werden dabei stark von der Konzentration der Cellulosederivate in der wässrigen Lösung und von der Höhe des repräsentativen Viskositätswertes bestimmt. Es wird daher nachfolgend nur auf den relativen Verlauf von G' und G" mit steigender Kreisfrequenz $\omega$ eingegangen. Bei einer Konzentration von 1,5 bis 2 Gewichtsteilen Cellulosederivat auf 100 Gewichtsteile der wässrigen Lösung und einer Temperatur von ca. 20°C verlaufen G' und G" für die Cellulosederivate nach dem Stand der Technik in der Weise, dass bei kleiner Kreisfrequenz $\omega$ der Speichermodul G' kleiner als der Verlustmodul G" ist, mit steigender Kreisfrequenz G' aber stärker zunimmt als G". Dabei kann auch der Fall eintreten, dass G' oberhalb einer bestimmten Kreisfrequenz schließlich größer wird als G", die Lösung bei hohen Werten der Kreisfrequenz somit vorwiegend elastisch reagiert.

Für herkömmliche Cellulosederivate ist in wässriger Lösung die Abhängigkeit von der Kreisfrequenz demnach für G' deutlich größer als für G"; insbesondere hängen die linear-viskoelastischen Materialfunktionen Speichermodul G' und Verlustmodul G" im Bereich der Kreisfrequenz $\omega$ von 0,1 s-1 bis 1 s-1 in der Weise von der Kreisfrequenz ab, dass die Exponenten n und m der Beziehungen

(1) G' $\propto \omega$n (Speichermodul verhält sich proportional zur Kreisfrequenz hoch n)
und

(2) G" $\propto \omega$m (Verlustmodul verhält sich proportional zur Kreisfrequenz hoch m)

deutlich verschieden sind, wobei für die Celluloseether nach dem Stand der Technik das Verhältnis von n zu m mehr als 1,20 beträgt.

Eine optimale Einstellung der rheologischen Eigenschaften wässriger Systeme kann neben der durch den Einsatz von Cellulosederivaten möglichen Viskositätserhöhung auch die Ausbildung gelartiger Eigenschaften erfordern. Hier bieten zum Beispiel Methylhydroxyethylcellulose oder Methylhydroxypropylcellulose, die in Wasser einen thermischen Flockungspunkt aufweisen, die Möglichkeit, temperaturabhängig Gele zu bilden, siehe N. Sarkar: "Kinetics of thermal gelation of methylcellulose and hydroxypropylmethylcellulose in aqueous solutions", Carbohydrate Polymers 26 (1995) 195-203. Die Abhängigkeit von der Kreisfrequenz ist für G' in gel-artigen Systemen nicht mehr deutlich größer als für G".

Die gel-artigen Eigenschaften nur durch die Nutzung des thermischen Flockungspunktes unter Einstellung bestimmter Temperaturen erreichen zu können, bedeutet für die Verwendung von Cellulosederivaten eine deutliche Einschränkung in doppelter Hinsicht: Erstens ist es erforderlich, bei der Anwendung mit einem gewissen Aufwand die zum Erreichen der gel-artigen Eigenschaften geeigneten Temperaturen einzustellen. Zweitens ist die Auswahl der Cellulosederivate auf die Produkte beschränkt, die im gewünschten Temperaturbereich einen Flockungspunkt aufweisen.

Im Falle der Zementextrusion ist zusätzlich anzunehmen, dass, die thermische Flockung bzw. Gelierung des Celluloseethers ursächlich mit unerwünschten Phänomenen zusammenhängt, wie stark ansteigender Extrusionsdruck und deutliche Verschlechterung des Extrusionsergebnisses bei Überschreiten einer vom verwendeten Celluloseether abhängigen kritischen Temperatur. Die temperaturabhängige Gelbildung kann daher im Falle der Zementextrusion grundsätzlich nicht vorteilhaft genutzt werden.

Der teilweise oder vollständige Ersatz von Cellulosederivaten durch andere Hydrokolloide, die in der Lage sind, gel-artige Eigenschaften zu erreichen, ist oft nicht wünschenswert, da dadurch bestimmte Eigenschaften der Cellulosederivate, wie z.B. gute Wasserrückhaltung, nicht mehr voll zur Verfügung stehen. Auch basieren solche Hydrokolloide im allgemeinen nicht auf nachwachsenden Rohstoffen oder sind nicht biologisch abbaubar.

Der Begriff "gelartige rheologische Eigenschaften" wird hier durch die Abhängigkeit der linear-viskoelastischen Materialfunktionen Speichermodul G' und Verlustmodul G" von der Kreisfrequenz w definiert, angelehnt an die Definition des "Gelpunktes" bekannt aus Arbeiten von Chambon und Winter [siehe: F. Chambon, H. H., Winter: "Linear Viscoelasticity at the Gel Point of a Crosslinking PDMS with Imbalanced Stoichometry", Journal of Rheology 31 (8) (1987) 683-697]; dort wird der Gelpunkt als der Punkt beschrieben, wo die Frequenzabhängigkeit für G' und G" nach den Beziehungen:

(1) $G' \propto \omega^n$ (Speichermodul verhält sich proportional zur Kreisfrequenz hoch n)

und

(2) $G" \propto \omega^m$ (Verlustmodul verhält sich proportional zur Kreisfrequenz hoch m)

beschrieben werden kann und die Exponenten n und m gleich groß sind, bzw. das Verhältnis von n zu m einen Wert von 1 erreicht. Die Werte von G' und G" können dabei verschieden sein, es kommt nur darauf an, dass der Logarithmus von G' und der Logarithmus von G" jeweils aufgetragen gegen den Logarithmus von ω dieselbe Steigung aufweisen, wobei wir hier nur den Bereich der Kreisfrequenz ω von 0,1 s-1 bis 1 s-1 betrachten. Dieser Definition folgend, sollen die Cellulosederivate mit gel-artigen rheologischen Eigenschaften ein Verhältnis von n zu m aufweisen, das nahe bei 1 liegt beziehungsweise diesem Wert deutlich näher kommt als dies für die herkömmlichen Cellulosederivate der Fall ist; insbesondere sollte das Verhältnis von n zu m keiner als oder gleich 1,20 sein. Gleichzeitig sollte das Verhältnis von n zu m einen Wert von 1 nicht deutlich unterschreiten: Im Falle der Zementextrusion hat sich gezeigt, dass die gel-artigen Eigenschaften bereits nicht mehr vorteilhaft wirksam sind, wenn das Verhältnis von n zu m einen Wert von 0,90 unterschreitet.

Irreversibel vernetzte Celluloseether mit gel-artigen rheologischen Eigenschaften sind dadurch erhältlich, dass man

a) Cellulose mit wässriger Alkalihydroxid-Lösung in Gegenwart eines Suspensiönsmittels alkalisiert,

b) die alkalisierte Cellulose mit einem oder mehreren Alkylenoxiden reagieren lässt,

c) dann mit einem im Suspensionsmittel enthaltenen Alkylhalogenid umsetzt

d) anschließend oder gleichzeitig die alkalisierte Cellulose mit einem Vernetzungsmittel in einer Menge von 0,0001 bis 0,05 eq, wobei die Einheit "eq" für das molare Verhältnis des Vernetzungsmittels relativ zur Anhydroglucoseeinheit (AGU) der eingesetzten Cellulose steht, umsetzt, und

e) nach gegebenenfalls weiterer Zugabe von Alkalihydroxid und/oder Alkylierungsmittel das erhaltene irreversibel vernetzte Cellulosederivat aus dem Reaktionsgemisch abtrennt, gegebenenfalls reinigt und trocknet.

Solche gel-artigen rheologischen Eigenschaften zeichnen sich dadurch aus, dass die linear-viskoelastischen Materialfunktionen Speichermodul G' und Verlustmodul G" einer Lösung aus 1,5 bis 2,0 Gewichtsteilen des Celluloseethers auf 100 Gewichtsteile Lösung bei einer Temperatur von 20°C +/- 1°C, und bei Verwendung von Wasser ohne weitere Zusätze als Lösungsmittel, im Bereich der Kreisfrequenz ω von 0,1 s-1 bis 1 s-1 in der Weise von der Kreisfrequenz abhängen, dass die Exponenten n und m der Beziehungen

(1) G' $\propto \omega$n (Speichermodul verhält sich proportional zur Kreisfrequenz hoch n)
und

(2) G" $\propto \omega$m (Verlustmodul verhält sich proportional zur Kreisfrequenz hoch m) in etwa gleich groß sind, wobei für die Celluloseether nach dieser Erfindung das Verhältnis von n zum von 0,90 bis 1,20 beträgt.

Die linear-viskoelastischen Materialfunktionen G' und G" einer wässrigen Lösung der Celluloseether werden mit Hilfe eines kommerziell erhältlichen Rotations- und Oszillationsrheometers im Oszillationsmodus bestimmt. Ein solches Rheometer ist ein Messgerät, mit dem für eine Probe, wie hier Celluloseetherlösung, der Zusammenhang von mechanischer Deformation und mechanischer Spannung ermittelt werden kann, wobei je nach Bauart des Rheometers Deformation oder Spannung vorgegeben werden und die jeweils andere Größe gemessen wird. Dazu wird eine geeignete Menge der Celluloseetherlösung in die Messvorrichtung eingebracht. Besonders geeignete Messvorrichtungen sind Kombinationen aus Platte und Kegel oder Platte und Platte. Messvorrichtungen aus Becher und Zylinder sind prinzipiell ebenfalls geeignet, jedoch wegen des in der Regel höheren Trägheitsmoments des Drehkörpers für Messungen im Oszillationsmodus nicht ideal.

Nach dem Einfüllen wird die Celluloseetherlösung für einige Zeit temperiert, um definierte Randbedingungen für die Messung einzustellen.

Die Messung im Oszillationsmodus erfolgt dann in der Weise, dass mit Hilfe der Rheometersteuerung eine im Laufe der Zeit (Zeit dargestellt durch das Symbol: t) sinusförmig oszillierende Scherdeformation $\gamma^*$ der Probe eingestellt wird, charakterisiert durch die Deformationsamplitude $\gamma$0 und die Kreisfrequenz $\omega$:

$$\gamma^* = \gamma0 \sin(\omega t)$$

Die Deformationsamplitude $\gamma$0 beschreibt die maximal während der Oszillation auftretende Deformation, das heißt, $\gamma^*$ wechselt während eines Oszillationszyklus zwischen den Extremwerten +$\gamma$0 und -$\gamma$0. Die Dauer eines vollständigen Oszillationszyklus beträgt $2\pi$ mal den Kehrwert der Kreisfrequenz $\omega$, das heißt die Oszillation erfolgt in kürzerer Zeit, je höher die Kreisfrequenz eingestellt wird.

Die bei diesem Vorgang erzeugte mechanische Spannung $\sigma^*$ oszilliert mit der Spannungsamplitude $\sigma$0, ebenfalls sinusförmig im Laufe der Zeit und mit gleicher Kreisfrequenz wie die Deformation $\gamma^*$, jedoch verschoben um den Phasenwinkel $\delta$:

$$\sigma^* = \sigma0 \sin(\omega t + \delta)$$

Der Phasenwinkel nimmt je nach den viskoelastischen Eigenschaften der Probe Beträge von 0 bis $\pi/2$ an, wobei $\delta = 0$ den Grenzfall für ideales rein elastisches Verhalten darstellt und $\delta = \pi/2$ den Grenzfall für ideales rein viskoses Verhalten.

Die Ermittlung linear-viskoelastischer Materialfunktionen erfordert, dass zuvor der Bereich der Deformationsamplitude $\gamma$0 ermittelt wird, wo für die zu untersuchende Probe ein linearer Zusammenhang zwischen Deformationsamplitude und Spannungsamplitude besteht und sich der Phasenwinkel mit der Deformationsamplitude praktisch nicht ändert. Diese Bedingungen sind in der Regel gut erfüllt, wenn die Deformationsamplitude ausreichend klein gewählt wird.

Die Daten können dann direkt in die linear-viskoelastischen Materialfunktionen Speichermodul G' und Verlustmodul G" umgerechnet werden:

G' = $\sigma$0/$\gamma$0 cos $\delta$ (Speichermodul ist gleich Spannungsamplitude geteilt durch Deformationsamplitude, multipliziert mit dem Kosinus des Phasenwinkels)
und

G" = $\sigma$0/$\gamma$0 sin $\delta$ (Verlustmodul ist gleich Spannungsamplitude geteilt durch Deformationsamplitude, multipliziert mit dem Sinus des Phasenwinkels)

Bei konstanter Temperatur hängen G' und G" für eine gegebene Celluloseetherlösung nur von der Kreisfrequenz $\omega$ ab. An Hand des Verlaufes der linear-viskoelastischen Materialfunktionen Speichermodul G' und Verlustmodul G" bei Variation der Kreisfrequenz $\omega$ lassen sich herkömmliche Celluloseether und Celluloseether mit gel-artigen rheologischen Eigenschaften eindeutig unterscheiden.

Die gel-artigen rheologischen Eigenschaften der erfindungsgemäß verwendeten Celluloseether werden sowohl für Lösungen in Wasser ohne weitere Zusätze gefunden, als auch für Lösungen in einem Lösungsmittel aus 98 Gewichtsteilen Wasser und 2 Gewichtsteilen Natriumhydroxid je 100 Gewichtsteilen Lösungsmittel.

Dabei weisen die Lösungen der erfindungsgemäß verwendeten Celluloseether für die Exponenten n und m der Beziehungen

(1) G' $\propto \omega$n (Speichermodul verhält sich proportional zur Kreisfrequenz hoch n)

und

(2) G" $\propto \omega$m (Verlustmodul verhält sich proportional zur Kreisfrequenz hoch m)

ein Verhältnis von n zu m auf, das im Bereich von 0,90 bis 1,20 liegt. Für bevorzugte verwendete Celluloseether nach dieser Erfindung beträgt das Verhältnis von n zu m 0,95 bis 1,20, besonders bevorzugt von 0,98 bis 1,18. Noch weiter bevorzugte Celluloseether weisen ein Verhältnis von n zu m von 0,98 bis 1,15 auf; das Verhältnis von n zu m für die am meisten bevorzugten Celluloseether liegt im Bereich von 1,00 bis 1,12.

Ebenfalls charakteristisch ist die geringe Änderung des Verhältnisses von n zu m beim Wechsel des Lösungsmittels. Dabei wirkt sich die Auswahl der Lösungsmittel

A: Wasser

oder

B: 98 Gewichtsteile Wasser und 2 Gewichtsteile Natriumhydroxid je 100 Gewichtsteilen Lösungsmittel

nur wenig auf das Verhältnis der beiden Exponenten n und m aus, wobei die Differenz des Verhältnisses von n zu m im Lösungsmittel A zum Verhältnis von n zu m im Lösungsmittel B unter ansonsten identischen Bedingungen weniger beträgt als 20 von 100 des Mittelwertes aus dem Verhältnis von n zu m im Lösungsmittel A und dem Verhältnis von n zu m im Lösungsmittel B. Für bevorzugt verwendete Celluloseether nach dieser Erfindung beträgt die entsprechende Differenz weniger als 15 von 100, besonders bevorzugt weniger als 10 von 100 und für die am meisten bevorzugten Celluloseether weniger als 8 von 100 des Mittelwertes aus dem Verhältnis von n zu m im Lösungsmittel A und dem Verhältnis von n zu m im Lösungsmittel B.

Dieses rheologische Profil kann durch Cellulosederivate eingestellt werden, welche mit einem oder mehreren polyfunktionellen Reagenzien (auch Vernetzungsmittel genannt) irreversibel vernetzt wurden. Die Vernetzung kann vor oder nach der Veretherungsreaktion zum wasserlöslichen Cellulosederivat durchgeführt werden. Bevorzugt ist jedoch die gleichzeitige Veretherung mit Reagenzien die anschließend die Wasserlöslichkeit bewirken und dem Vernetzungsmittel.

Im Gegensatz zur irreversiblen Vernetzung mit einem Vernetzungsmittel wird die reversible Vernetzung mit Aldehyden wie z.B. Glyoxal während des Löseprozesses in Wasser wieder aufgehoben. Die erfindungsgemäßen irreversibel vernetzten Cellulosederivate können gegebenenfalls zusätzlich reversibel vernetzt also lösungsverzögert werden.

Als Vernetzungsmittel können polyfunktionelle Verbindungen eingesetzt werden, wobei bevorzugt Verbindungen eingesetzt werden, die über Halogengruppen oder Epoxygruppen oder ungesättigte Gruppen verfügen, so dass bei der Umsetzung Etherbindungen geknüpft werden. Bevorzugt werden bifunktionelle Verbindungen aus der Gruppe 1,2-Dichlorethan, 1,3-Dichlorpropan, Dichlordiethylether, Diglycidylether, Phosphonsäurediglycidylester, Divinylsulfon eingesetzt. Verbindungen die zwei unterschiedliche funktionelle Gruppen tragen können ebenfalls eingesetzt werden. Beispiele hierfür sind Glycidylmethacrylat, Epichlorhydrin und Epibromhydrin. Besonders bevorzugtes Vernetzungsmittel ist Epichlorhydrin.

Die Einsatzmenge des Vernetzungsmittels beträgt 0,0001 bis 0,05 eq, wobei die Einheit "eq" für das molare Verhältnis des jeweiligen Vernetzungsmittels relativ zur Anhydroglucoseeinheit (AGU) der eingesetzten Cellulose steht. Die bevorzugte Einsatzmenge des Vernetzungsmittels beträgt 0,0005 bis 0,01 eq. Die besonders bevorzugte Einsatzmenge des Vernetzungsmittels beträgt 0,001 bis 0,005 eq.

Bei den erfindungsgemäß verwendeten Cellulosederivaten handelt es sich bevorzugt um Celluloseether, deren Wasserlöslichkeit durch die Veretherung mit Hydroxyalkylgruppen und/oder mit Alkylgruppen erreicht wird. Bevorzugt handelt es sich bei den Cellulosederivaten um Derivate der Hydroxyethylcellulose (HEC) oder der Methylcellulose (MC). Insbesondere die MC wird bevorzugt als Mischether mit Hydroxyalkylgruppen eingesetzt (Methylhydroxyalkylcellulosen). Als Mischether der Methylcellulose sind hier insbesondere die Methylhydroxyethylcellulose (MHEC), die Methylhydroxypropylcellulose (MHPC) und die Methylhydroxyethylhydroxypropylcellulose (MHEHPC) zu nennen. Als Mischether der HEC sind insbesondere die Ethylhydroxyethylcellulose und die Ethylmethylhydroxyethylcellulose zu nennen.

Die Alkylsubstitution wird in der Celluloseether-Chemie allgemein durch den DS beschrieben. Der DS ist die mittlere Anzahl an substituierten OH-Gruppen pro Anhydroglucoseeinheit. Die Methylsubstitution wird beispielsweise als DS (Methyl) oder DS (M) angegeben.

Üblicherweise wird die Hydroxyalkylsubstitution durch den MS beschrieben. Der MS ist die mittlere Anzahl von Molen des Veretherungsreagenz, die pro Mol Anhydroglucoseeinheit etherartig gebunden sind. Die Veretherung mit dem Veretherungsreagenz Ethylenoxid wird beispielsweise als MS (Hydroxyethyl) oder MS (HE) angegeben. Die Veretherung mit dem Veretherungsreagenz Propylenoxid wird dementsprechend als MS (Hydroxypropyl) oder MS (HP) angegeben.

Die Bestimmung der Seitengruppen erfolgt anhand der Zeisel-Methode (Literatur: G. Bartelmus und R. Ketterer, Z. Anal. Chem. 286 (1977) 161-190).

Bevorzugt werden jedoch irreversibel vernetzte Mischether der Methylhydroxyethylcellulose für die Zementextrusion genutzt, wobei bevorzugt DS (M)-Werte von 1,2 bis 1,7 und MS (HE)-Werte von 0,15 bis 0,65 eingestellt werden. Besonders bevorzugt werden im Falle der MHEC DS (M)-Werte von 1,3 bis 1,6 und MS (HE)-Werte von 0,25 bis 0,55 eingestellt. Am meisten bevorzugt werden im Falle der MHEC DS (M)-Werte von 1,35 bis 1,55 und MS (HE)-Werte von 0,3 bis 0,5 eingestellt.

Als Ausgangsmaterial für die Veretherung geeignet sind gemahlener Holzzellstoff und gemahlene Linters-Cellulose oder Mischungen aus diesen.

Erfindungsgemäß können Additive verwendet werden, welche irreversibel vernetzte Cellulosederivate mit gel-artigen rheologischen Eigenschaften enthalten oder aus diesen bestehen. Solche Additive enthalten 1 bis 100 %, bevorzugt 10 bis 100 %, besonders bevorzugt 50 bis 100 %, am meisten bevorzugt 90 bis 100 % irreversibel vernetzte Cellulosederivate. Weitere Bestandteile solcher Additive für die Zementextrusion können aus der Gruppe der nicht-irreversibel vernetzten Cellulosederivate oder anderer wasserlöslicher Polymere auf Basis nachwachsender Rohstoffe oder auch synthetischer Polymere stammen. Bevorzugt bestehen solche Compounds zu mehr als 90 % aus Cellulosederivaten, besonders Methylcellulosederivaten, insbesondere MHEC.

Ein weiterer Gegenstand der Erfindung ist ein Verfahren zur Extrusion von Baustoffen, bei den irreversibel vernetzte Cellulosederivate mit gel-artigen rheologischen Eigenschaften als Additiv (Plastifiziermittel) eingesetzt werden. Bevorzugt ist das Verfahren ein Verfahren zur Extrusion mineralischer Massen, insbesondere zur Zementextrusion.

Die Extrusion mineralischer Massen ist ein Verfahren, pastöse bindemittelhaltige Mischungen durch Pressen durch einen Düsenmund in beliebige Profile zu formen. Extrudierte Massen enthalten als Bestandteile grundsätzlich mindestens ein Bindemittel, ferner Zuschläge (zum Beispiel Sande, mineralische Mehle) und/oder Leichtzuschläge.

Unter Bindemitteln werden hier alle mineralischen Bindemittel wie Zement, Gips, Kalkhydrat, Branntkalk, Ton/Lehm, Silikate, spezielle Flugaschen und keramische Bindemittel verstanden.

Unter Zuschlägen werden hier alle Arten von Sanden und Steinmehlen verstanden, wie sie üblicherweise in Baumaterialien eingesetzt werden. Dies sind insbesondere Kiese, Sande, Splitte, Aschen und Mehle auf Basis von Quarz, Kalk (Calciumcarbonat), Dolomit, Kaolin, Marmor, Glas, verschiedenen Arten von Bauschutt, spezielle Flugaschen, Tonen, Bentoniten und anderen Schichtsilikaten. Leichtzuschläge sind Zuschläge mit besonders niedriger Dichte. Diese können mineralischer Herkunft sein wie beispielsweise Perlite (Blähton), Blähglas, geblähte Calciumsilikate oder hochporöse natürliche Sande auf Quarz- oder Kalkbasis, sie können aber auch organischen Ursprungs sein wie expandiertes Polystyrol, Polyurethanschaumstoff, Kork usw.

Unter Fasern werden hier alle Arten von Naturfasern oder synthetischen Fasern verstanden wie beispielsweise Fasern auf Basis von Cellulose, Bambus, Kokos, Polyethylen, Polypropylen, Polyamid, Polyacrylnitril, Kohlenstoff, Glas, Keramik und andere mineralische Fasern. Deren Faserlängen und Faserdickendicken können über weite Bereiche variiert werden, um bestimmte Produkteigenschaften zu erzielen. Bevorzugt werden Cellulosefasern und/oder Polypropylenfasern in einer Einsatzmenge von 0 bis 20 Gew.%, bevorzugt 0 bis 12 Gew.%, besonders bevorzugt 2 bis 8 Gew. %, jeweils bezogen auf die Gesamtmasse der trockenen Komponenten, eingesetzt.

Die Rezeptur kann neben Cellulosederivaten als Additiv gegebenenfalls auch noch weitere Komponenten enthalten, wie Verflüssiger/Fließmittel, beispielsweise Sulfonate auf Basis von Melamin oder Naphthalin sowie Polyether oder wie Hydrophobiermittel und Gleitmittel, beispielsweise Polyethylenoxid oder verwandte Polymere.

Das erfindungsgemäße Verfahren wird durchgeführt, indem alle Rohstoffe in beliebiger Reihenfolge miteinander vermischt werden. Im allgemeinen werden alle Trockenkomponenten zunächst trocken vorgemischt, dann mit einer in Vorversuchen bestimmten Menge Wasser versetzt und bis zur Erreichung einer homogenen Paste gemischt. Es ist jedoch auch möglich, die Trockenstoffe mit einer wässrigen Lösung des Additivs (Plastifiziermittels) zu versetzen oder sämtliche Komponenten und das Wasser gleichzeitig zu mischen. Es ist ebenfalls möglich, einen Teil oder alle Sande/Zuschlagsstoffe mit einer Feuchte von weniger als 10% zuzumischen.

Nachdem alle Komponenten miteinander vermischt worden sind, werden sie anschließend in einem Ein-oder Zweiwellenextruder verdichtet und durch ein Mundstück ausgepresst. Es ist möglich, Extuder mit und ohne Vakuumkammer und Extruder mit oder ohne Kühlung einzusetzen. Zwischen Mischen und Extrudieren kann auch noch ein Knetschritt eingeschaltet werden.

Es werden 0,3 bis 2,5 Gew.% des Additivs bezogen auf Gesamtmasse der trockenen Stoffe eingesetzt. Bevorzugt werden 0,4 bis 2,0 Gew.% des Additivs eingesetzt, besonders bevorzugt 0,5 bis 1,5 Gew.%.

Die nachfolgenden Beispiele sollen die erfindungsgemäße Verwendung erläutern, ohne die Erfindung zu beschränken:

**Beispiele:**

**Beispiel 1** (Vergleichsbeispiel)

In einem Autoklaven werden ca 20 kg gemahlener Holzzellstoff (Feuchte: 3,6 Gew.-%; GVZ in Cuen: 1558 ml/g) und ca 20 kg gemahlene Baumwoll-Linters (Feuchte: 4,2 Gew.-%; GVZ in Cuen: 1753 ml/g) durch Evakuieren und Beaufschlagen mit Stickstoff inertisiert. Anschließend wird ca die dreifache Menge an Dimethylether , enthaltend 2,0 mol eq Chlormethan, in den Reaktor dosiert. Dann werden 2,2 mol eq Natriumhydroxid in Form einer 50 Gew.-%igen wässrigen Natronlauge unter Mischen auf die Cellulose gesprüht und das Reaktionssystem hierdurch alkalisiert. Die Dosierung der Lauge und die Alkalisierung verlaufen unter einen Temperaturanstieg von Raumtemperatur auf ca 40 C. Dann werden 0,66 mol eq Ethylenoxid in den Reaktor dosiert. Dabei wird das Gemisch auf über 60 C geheizt. Anschließend wird auf ca 80°C aufgeheizt.. Bei dieser Temperatur werden 2,0 mol eq Chlormethan in den Reaktor dosiert und mit dem Reaktionsgemisch umgesetzt. Dann werden die flüchtigen Bestandteile abdestilliert und der Reaktor evakuiert.

Das Rohprodukt wird einer Wäsche mit heißem Wasser unterworfen, anschließend getrocknet und gemahlen.

Der Substitutionsgrad der so erhaltenen Methylhydroxyethylcellulose durch Methylgruppen (DS-M) betrug 1,48, der Substitutionsgrad durch Hydroxyethylgruppen (MS-HE) betrug 0,40. Der NaCl-Gehalt betrug 2,3 Gew.-%

**Beispiel 2**

Wie die Synthese in Beispiel 1, jedoch werden im Anschluss an die Alkalisierung 0,001 mol eq Epichlorhydrin gelöst in 2,5 1 Dimethoxyethan in den Reaktor dosiert.

Der Substitutionsgrad der erhaltenen irreversibel vernetzten Methylhydroxyethylcellulose durch Methylgruppen (DS-M) betrug 1,42, der Substitutionsgrad durch Hydroxyethylgruppen (MS-HE) betrug 0,43. Der NaCl-Gehalt 3,6 Gew.-%.

Messungen zu den Beispielen

Die Methylhydroxyethylcellulosen (MHEC) aus Beispiel 1 (Messung 1) und Beispiel 2 (Messung 2) wurden in Wasser gelöst: 1,5 Gewichtsteile MHEC und 98,5 Gewichtsteile Wasser.

Das Löseverfahren ist für alle Messungen und Beispiele gleich: Die abgewogene Menge Celluloseether wird in die zuvor abgewogene Menge Lösungsmittel bei Raumtemperatur unter Rühren langsam eingestreut, um die Bildung von Klumpen zu vermeiden. Das als Behälter für die Lösung verwendete runde Glasgefäß wird mit einem Deckel dicht verschlossen und mehrmals mit der Hand geschüttelt, um die noch nicht gelösten Anteile Celluloseether zu verteilen. Der weitere Lösevorgang erfolgt innerhalb von 24 Stunden, wobei das runde Glasgefäß liegend um seine Längsachse langsam gedreht wird. Auf diese Weise werden alle Teile des Innenraums des Glasgefäßes von der Flüssigkeit laufend benetzt.

Nach dem Lösevorgang wird das Glasgefäß mit der Celluloseetherlösung für einige Stunden aufrecht stehen gelassen damit eventuell in der Lösung verteilte Luftblasen aufsteigen und aus der Lösung entweichen können.

Anschließend erfolgt die rheologische Charakterisierung der Celluloseetherlösung; die Prozedur ist für alle Messungen und Beispiele gleich: Direkt vor der Untersuchung mit dem Rheometer wird das Glasgefäß geöffnet und die erforderliche Menge Celluloseetherlösung aus dem Glasgefäß entnommen und in die Messvorrichtung des Rheometers gefüllt. Die Messvorrichtung wird in die zur Durchführung der Messung erforderliche Position gefahren. Vor dem Start der Messung wird die für die Celluloseetherlösung in der Messvorrichtung erforderliche Zeit zum Erreichen einer Temperatur von 20°C abgewartet; die Temperatursteuerung erfolgt entsprechend der Temperaturanzeige des Rheometers. Die Abweichungen auf Grund der Unsicherheit in der Kalibration der Temperaturmessung sind gering und betragen bei einer Temperaturanzeige von 20°C maximal +/-1°C. Die Schwankung der Temperaturanzeige während der Messung beträgt maximal +/- 0,2°C.

Während der Messung wird die Kreisfrequenz $\omega$ in der Weise variiert, dass insgesamt 6 Messpunkte im Bereich $\omega$ von 0,1 s-1 bis 1 s-1 liegen. Die Deformationsamplitude $\gamma 0$ beträgt dabei zwischen 0,0025 und 0,0075, was in allen beobachteten Fällen ausreichend klein war um die Materialfunktionen Speichermodul G' und Verlustmodul G" sicher im linear-viskoelastischen Bereich zu bestimmen.

Die Ergebnisse der rheologischen Messung 1 für Beispiel 1 (Vergleichsbeispiel) sind in Tabelle 1 aufgeführt:

Messung 1:

| Tabelle 1: Linear-viskoelastische Materialfunktionen Speichermodul G' und Verlustmodul G" in Abhängigkeit von der Kreisfrequenz ω für die Methylhydroxyethylcellulose aus Beispiel 1 (Vergleichsbeispiel) | | |
|---|---|---|
| ω<br>Einheit: s-1 | G'<br>Einheit: Pa | G"<br>Einheit: Pa |
| 0.1 | 6.64 | 13.2 |
| 0.159 | 9.78 | 17.9 |
| 0.251 | 14.8 | 23.4 |
| 0.398 | 21.5 | 30.4 |
| 0.632 | 30.6 | 37.7 |
| 1 | 42.4 | 47.6 |
| Rheometer: Universal Dynamic Spectrometer UDS 200 von der Firma Physica Messtechnik GmbH, Stuttgart, Deutschland<br>Messvorrichtung: Kegel/Platte mit 50 mm Durchmesser, Kegel mit 1° Kegelwinkel und 0,05 mm Abflachung der Kegelspitze | | |

Die weitere Auswertung der Daten erfolgt in der Weise, dass die Exponenten n und m der Beziehungen

(1) G' $\propto$ ωn (Speichermodul verhält sich proportional zur Kreisfrequenz hoch n)
und

(2) G" $\propto$ ωm (Verlustmodul verhält sich proportional zur Kreisfrequenz hoch m)

ermittelt werden, indem eine Regressionsanalyse für den Logarithmus des Speichermoduls G' (log G') als Funktion des Logarithmus der Kreisfrequenz ω (log ω) durchgeführt wird wobei die Steigung der Geraden dem Exponenten n entspricht, sowie indem eine Regressionsanalyse für den Logarithmus des Verlustmoduls G" (log G") als Funktion des Logarithmus der Kreisfrequenz ω (log ω) durchgeführt wird wobei die Steigung der Geraden dem Exponenten m entspricht. Die Ergebnisse dieser Regressionsanalyse für Beispiel 1 (Vergleichsbeispiel) sind in Tabelle 2 aufgeführt:

| Tabelle 2: Regressionsanalyse für log G' gegen log ω und log G" gegen log ω für die Methylhydroxyethylcellulose aus Beispiel 1 (Vergleichsbeispiel), Daten für G', G" und ω aus Tabelle 1 | | | |
|---|---|---|---|
| Log ω | log G' | log ω | Log G" |
| -1 | 0.8222 | -1 | 1.1206 |
| -0.7986 | 0.9903 | -0.7986 | 1.2529 |
| -0.6003 | 1.1702 | -0.6003 | 1.3692 |
| -0.4001 | 1.3324 | -0.4001 | 1.4829 |
| -0.1993 | 1.4857 | -0.1993 | 1.5763 |
| 0 | 1.6273 | 0 | 1.6776 |
| Steigung: 0,8107<br>R: 0,9992<br>Die Steigung entspricht dem Exponenten n der Gleichung (1)<br>Die Regression erfolgte nach dem bekannten Prinzip der kleinsten Summe der Fehlerquadrate. R ist ein Koeffizient für die Qualität der Regression und sollte stets größer als 0,95 sein. | | Steigung: 0,5528<br>R: 0,9982<br>Die Steigung entspricht dem Exponenten m der Gleichung (2)<br>Die Regression erfolgte nach dem bekannten Prinzip der kleinsten Summe der Fehlerquadrate. R ist ein Koeffizient für die Qualität der Regression und sollte stets größer als 0,95 sein. | |

| Tabelle 2: Regressionsanalyse für log G' gegen log ω und log G" gegen log ω für die Methylhydroxyethylcellulose aus Beispiel 1 (Vergleichsbeispiel), Daten für G', G" und ω aus Tabelle 1 | | | |
|---|---|---|---|
| Log ω | log G' | log ω | Log G" |
| Für die Methylhydroxyethylcellulose aus Beispiel 1 (Vergleichsbeispiel) ergibt sich somit ein Verhältnis von n zu m von 1,47 (0,8107/0,5528); das Produkt besitzt keine gelartigen rheologischen Eigenschaften. | | | |

Messung 2:

Die Ergebnisse der rheologischen Messung 2 für Beispiel 2 sind in Tabelle 3 aufgeführt:

| Tabelle 3: Linear-viskoelastische Materialfunktionen Speichermodul G' und Verlustmodul G" in Abhängigkeit von der Kreisfrequenz ω für die Methylhydroxyethylcellulose aus Beispiel 2 | | |
|---|---|---|
| ω<br>Einheit: s-1 | G'<br>Einheit: Pa | G"<br>Einheit: Pa |
| 0.1 | 26.5 | 17.8 |
| 0.159 | 31.6 | 20.9 |
| 0.251 | 38.1 | 25.6 |
| 0.398 | 45.1 | 29.9 |
| 0.632 | 54.3 | 35.7 |
| 1 | 64.5 | 41.3 |
| Rheometer: | Universal Dynamic Spectiometer UDS 200 von der Firma Physica Messtechnik GmbH, Stuttgart, Deutschland | |
| Messvorrichtung: | Kegel/Platte mit 50 mm Durchmesser, Kegel mit 1° Kegelwinkel und 0,05 mm Abflachung der Kegelspitze | |

Die Ergebnisse der Regressionsanalyse für Messung 2 sind in Tabelle 4 aufgeführt:

| Tabelle 4: Regressionsanalyse für log G' gegen log ω und log G" gegen log ω für die Methylhydroxyethylcellulose aus Beispiel 2, Daten für G', G" und ω aus Tabelle 3 | | | |
|---|---|---|---|
| Log ω | log G' | log ω | Log G" |
| -1 | 1.4232 | -1 | 1.2504 |
| -0.7986 | 1.4997 | -0.7986 | 1.3201 |
| -0.6003 | 1.5809 | -0.6003 | 1.4082 |
| -0.4001 | 1.6542 | -0.4001 | 1.4757 |
| -0.1993 | 1.7348 | -0.1993 | 1.5527 |
| 0 | 1.8096 | 0 | 1.6160 |
| Steigung:            0,3873<br>R:                        0,9999 | | Steigung:            0,3706<br>R:                        0,9991 | |
| Die Steigung entspricht dem Exponenten n der Gleichung (1) | | Die Steigung entspricht dem Exponenten m der Gleichung (2) | |
| Die Regression erfolgte nach dem bekannten Prinzip der kleinsten Summe der Fehlerquadrate. R ist ein Koeffizient für die Qualität der Regression und sollte stets größer als 0,95 sein. | | Die Regression erfolgte nach dem bekannten Prinzip der kleinsten Summe der Fehlerquadrate. R ist ein Koeffizient für die Qualität der Regression und sollte stets größer als 0,95 sein. | |

(fortgesetzt)

| Tabelle 4: Regressionsanalyse für log G' gegen log ω und log G" gegen log ω für die Methylhydroxyethylcellulose aus Beispiel 2, Daten für G', G" und ω aus Tabelle 3 | | | |
|---|---|---|---|
| Log ω | log G' | log ω | Log G" |
| Für die Methylhydroxyethylcellulose aus Beispiel 2 ergibt sich somit ein Verhältnis von n zu m von 1,05 (0,3873/0,3706). Das Produkt besitzt gel-artige rheologische Eigenschaften. | | | |

Messung 3:

Die MHEC aus Beispiel 2 wurde in einem Lösungsmittel aus 98 Gewichtsteilen Wasser und 2 Gewichtsteilen Natriumhydroxid je 100 Gewichtsteilen Lösungsmittel gelöst: 1;5 Gewichtsteile. MHEC und 98,5 Gewichtsteile Lösungsmittel. Die rheologische Messung wurde durchgeführt wie in Messung 2 beschrieben. Die Auswertung ergab ein Verhältnis von n zu m von 1,03.

Der Vergleich von Messung 2 und Messung 3 zeigt, dass die MHEC aus Beispiel 2, für die an Hand einer Lösung in Wasser gel-artige Eigenschaften gefunden wurden (n/m = 1,05), auch in einer Lösung in einem Lösungsmittel aus 98 Gewichtsteilen Wasser und 2 Gewichtsteilen Natriumhydroxid je 100 Gewichtsteilen Lösungsmittel gel-artige Eigenschaften besitzt (n/m = 1,03). Der Mittelwert des Verhältnisses von n zu m aus beiden Lösungsmitteln beträgt 1,04. Die Differenz der Verhältnisse von n zu m aus beiden Lösungsmitteln beträgt 0,02; diese Differenz entspricht ca. 2 von 100 bezogen auf den Mittelwert aus den Verhältnissen von n zu m für die beiden Lösungsmittel.

Beispiele zur Zementextrusion

50 Teile Portland Zement I 32,5,

50 Teile Quarzsand,

5 Teile Fasern,

0,9 Teile Additiv

werden zunächst trocken vorgemischt, dann mit Wasser zu einer homogenen Paste gemischt, in den Einfülltrichter eines Einwellenextruders gefüllt, der Extrusionsschnecke zugeführt, in der Vakuumkammer evakuiert, komprimiert und durch das Mundstück gepresst. Die folgende Tabelle gibt die erhaltenen Resultate wider. Die Temperaturen der extrudierten Massen lagen zwischen 52 und 58 °C.

Der Wasseranteil wird durch Vorversuche so eingestellt, dass sich eine geeignete, formstabile Konsistenz des Extrudats ergibt, welche außerdem eine hohe Austragsgeschwindigkeit erlaubt.

| Beispiel | Additiv | n/m (Verhältnis der rheologisch ermittelten Exponenten) | Pressdruck am Düsenmund [bar] | Teile Wasser | Oberfläche Extrudat | Vergleich / Erfindung |
|---|---|---|---|---|---|---|
| 3 | MHEC aus Beispiel 1 | 1,47 (1,43) | 21-22 | 28 | O | V |
| 4 | MHEC aus Beispiel 2 | 1,05 (1,03) | 7-8 | 32 | ++ | E |
| 5 | 1/1-Gemisch (Gew.Teile) der MHEC aus Beispiel 1 und Beispiel 2 | 1,05 (1,03) bezogen auf die irreversibel vernetzte Komponente | 12-13 | 30 | + | E |

(fortgesetzt)

| Beispiel | Additiv | n/m (Verhältnis der rheologisch ermittelten Exponenten) | Pressdruck am Düsenmund [bar] | Teile Wasser | Oberfläche Extrudat | Vergleich / Erfindung |
|---|---|---|---|---|---|---|
| 6 | Irreversibel vernetzte MHEC DS-M: 1,40 MS-HE: 0,42 | 0,87 (0,82) | 16-17 | 29 | - | V |
| ++ sehr glatt, keine Risse<br>+ glatt, kaum Risse<br>etwas rauh, wenige Risse<br>sehr rauh, viele Risse bis brüchig | | | | | | |

Werte für das Exponenten-Verhältnis n/m: Angaben für Lösungen der Celluloseether in Wasser, Werte in Klammern für Lösungen in einem Lösungsmittel aus 98 Gewichtsteilen Wasser und 2 Gewichtsteilen Natriumhydroxid je 100 Gewichtsteilen Lösungsmittel. Die Lösungen enthielten jeweils 1,5 Gewichtsteile des Celluloseethers und 98,5 Gewichtsteile Lösungsmittel.

Ein Vergleichsbeispiel mit der MHEC aus Beispiel 1, jedoch einer Einsatzmenge von 32 Teilen Wasser lieferte kein formstabiles Extrudat.

**Patentansprüche**

1. Verwendung von irreversibel vernetzten Cellulosederivaten als Additive für die Extrusion von Baustoffsystemen.

2. Verwendung nach Anspruch 1, **dadurch gekennzeichnet, dass** die irreversibel vernetzten Cellulosederivate gelartige rheologische Eigenschaften aufweisen, deren Lösungen sowohl in Wasser als auch bei Verwendung eines Lösungsmittels aus 98 Gewichtsteilen Wasser und 2 Gewichtsteilen Natriumhydroxid je 100 Gewichtsteile Lösungsmittel mit jeweils 1,5 bis 2,0 Gewichtsteilen Celluloseether auf 100 Gewichtsteile Lösung gelartige Eigenschaften aufweisen, insbesondere indem die linear-viskoelastischen Materialfunktionen Speichermodul G' und Verlustmodul G" der Lösung bei einer Temperatur von 20°C +/- 1°C, im Bereich der Kreisfrequenzen $\omega$ von 0,1 s$^{-1}$ bis 1 s$^{-1}$ in der Weise von der Kreisfrequenz abhängen, dass die Exponenten n und m der Beziehungen
$G' \propto \omega^n$ (Speichermodul verhält sich proportional zur Kreisfrequenz hoch n)
und
$G" \propto \omega^m$ (Verlustmodul verhält sich proportional zur Kreisfrequenz hoch m) in etwa gleich groß sind, wobei für die Celluloseetherzusammensetzungen nach dieser Erfindung das Verhältnis von n zu m von 0,90 bis 1,20 beträgt.

3. Verwendung nach Anspruch 1, **dadurch gekennzeichnet, dass** die irreversibel vernetzten Cellulosederivate mit gelartigen rheologischen Eigenschaften dadurch erhältlich sind, dass man

a) Cellulose mit wässriger Alkalihydroxid-Lösung in Gegenwart eines Suspensionsmittels alkalisiert,
b) die alkalisierte Cellulose mit einem oder mehreren Alkylenoxiden reagieren lässt,
c) dann mit einem im Suspensionsmittel enthaltenen Alkylhalogenid umsetzt,
d) anschließend oder gleichzeitig die alkalisierte Cellulose mit einem Vernetzungsmittel in einer Menge von 0,0001 bis 0,05 eq, wobei die Einheit "eq" für das molare Verhältnis des Vernetzungsmittels relativ zur Anhydroglucoseeinheit (AGU) der eingesetzten Cellulose steht, umsetzt und
e) nach gegebenenfalls weiterer Zugabe von Alkalihydroxid und/oder Alkylierungsmittel das erhaltene irreversibel vernetzte Cellulosederivat aus dem Reaktionsgemisch abtrennt, gegebenenfalls reinigt und trocknet.

4. Verwendung nach Anspruch 1, **dadurch gekennzeichnet, dass** die irreversibel vernetzten Cellulosederivate mit Epichlorhydrin vernetzt wurden.

5. Verwendung nach Anspruch 1, **dadurch gekennzeichnet, dass** das irreversibel vernetzte Cellulosederivat ein Hydroxyethylcellulosederivat, ein Methylcellulosederivat, ein Methylhydroxypropylcellulosederivat oder ein Methlhydroxyethylcellulosederivat ist.

6.   Verfahren zur Extrusion von Baustoffsystemen, **dadurch gekennzeichnet, dass** man das Baustoffsystem unter Zusatz eines Additivs, enthaltend ein irreversibel vernetztes Cellulosederivat, extrudiert.

7.   Verfahren nach Anspruch 6, **dadurch gekennzeichnet, dass** das irreversibel vernetzte Cellulosederivat gelartige rheologische Eigenschaften aufweist, dessen Lösungen sowohl in Wasser als auch bei Verwendung eines Lösungsmittels aus 98 Gewichtsteilen Wasser und 2 Gewichtsteilen Natriumhydroxid je 100 Gewichtsteile Lösungsmittel mit jeweils 1,5 bis 2,0 Gewichtsteilen Celluloseether auf 100 Gewichtsteile Lösung gelartige Eigenschaften aufweisen, insbesondere indem die linear-viskoelastischen Materialfunktionen Speichermodul G' und Verlustmodul G" der Lösung bei einer Temperatur von 20°C +/- 1°C im Bereich der Kreisfrequenzen $\omega$ von 0,1 $s^{-1}$ bis 1 $s^{-1}$ in der Weise von der Kreisfrequenz abhängen, dass die Exponenten n und m der Beziehungen
$G' \propto \omega^n$ (Speichermodul verhält sich proportional zur Kreisfrequenz hoch n)
und
$G" \propto \omega^m$ (Verlustmodul verhält sich proportional zur Kreisfrequenz hoch m) In etwa gleich groß sind, wobei für die Celluloseetherzusammensetzungen nach dieser Erfindung das Verhältnis von n zu m von 0,90 bis 1,20 beträgt.

8.   Verfahren nach Anspruch 6, **dadurch gekennzeichnet, dass** das irreversibel vernetzte Cellulosederivat mit gelartigen rheologischen Eigenschaften dadurch erhältlich ist, dass man

   a) Cellulose mit wässriger Alkalihydroxid-Lösung in Gegenwart eines Suspensionsmittels alkalisiert,
   b) die alkalisierte Cellulose mit einem oder mehreren Alkylenoxiden reagieren lässt,
   c) dann mit einem im Suspensionsmittel enthaltenen Alkylhalogenid umsetzt,
   d) anschließend oder gleichzeitig die alkallsierte Cellulose mit einem Vernetzungsmittel in einer Menge von 0,0001 bis 0,05 eq, wobei die Einheit "eq" für das molare Verhältnis des Vernetzungsmittels relativ zur Anhydroglucoseeinheit (AGU) der eingesetzten Cellulose steht, umsetzt und
   e) nach gegebenenfalls weiterer Zugabe von Alkalihydroxid und/oder Alkylierungsmittel das erhaltene irreversibel vernetzte Cellulosederivat aus dem Reaktionsgemisch abtrennt, gegebenenfalls reinigt und trocknet.

9.   Verfahren nach Anspruch 6, **dadurch gekennzeichnet, dass** das irreversibel vernetzte Cellulosederivat mit Epichlorhydrin vernetzt wurde.

10.   Verfahren nach Anspruch 6, **dadurch gekennzeichnet, dass** das irreversibel vernetzte Cellulosederivat ein Hydroxyethylcellulosederivat, ein Methylcellulosederivat, ein Methylhydroxypropylcellulosederivat oder ein Methlhydroxyethylcellulosederivat ist.

11.   Verfahren nach einem der Ansprüche 6 bis 10, **dadurch gekennzeichnet, dass** man als Baustoffsystem ein zementäres Gemisch oder ein faserhaltiges zementäres Gemisch extrudiert.

12.   Verfahren nach einem der Ansprüche 6 bis 11, **dadurch gekennzeichnet, dass** man das Additiv in einer Menge von 0,3 bis 2,5 Gew.-%, bezogen auf die Gesamtmasse der trockenen Stoffe, zusetzt.

13.   Verfahren nach einem der Ansprüche 6 bis 12, **dadurch gekennzeichnet, dass** das Additiv irreversibel vernetzte Cellulosederivate in einer Menge von 10 bis 100 Gew.-% enthält.

**Claims**

1.   Use of irreversibly crosslinked cellulose derivatives as additives for the extrusion of construction material systems.

2.   Use according to claim 1, **characterized in that** the irreversibly crosslinked cellulose derivatives have gel-like rheological properties whereby solutions thereof in water, as well as using a solvent of 98 parts by weight of water and 2 parts by weight of sodium hydroxide per 100 parts by weight of solvent, each comprising 1.5 to 2.0 parts by weight of cellulose ether per 100 parts by weight of solvent, have gel-like properties whereby particularly the linear-viscoelastic material functions shear storage modulus G' and shear loss modulus G" of the solution at a temperature of 20°C +/- 1°C in the range of angular frequencies $\omega$ of 0.1 $s^{-1}$ to 1 $s^{-1}$ depend on the angular frequency so that exponents n and m of the relationship
$G' \propto \omega^n$ (shear storage modulus is proportional to the angular frequency to the power n)

and

G" $\propto \omega^m$ (shear loss modulus is proportional to the angular frequency to the power m) are approximately equal whereby for the cellulose ether compositions according to the present invention the ratio of n to m is from 0.90 to 1.20.

3.  Use according to claim 1, **characterized in that** the irreversibly crosslinked cellulose derivatives having gel-like rheological properties are obtainable by:

    a) alkalizing cellulose with aqueous alkali metal hydroxide solution in the presence of a suspension medium,
    b) reacting the alkalized cellulose with one or more alkylene oxides,
    c) then reacting it with an alkyl halide present in the suspension medium,
    d) subsequently or simultaneously reacting the alkalized cellulose with a crosslinker in an amount of 0.0001 to 0.05 equivalents wherein the  unit "eq" represents the molar ratio of the crosslinker relative to the anhydro glucose unit (AGU) of the cellulose used and
    e) after optionally further adding alkali metal hydroxide and/or alkylating agent separating off the resultant irreversibly crosslinked cellulose derivative from the reaction mixture, optionally purifying and drying it.

4.  Use according to claim 1, **characterized in that** the irreversibly crosslinked cellulose derivatives were crosslinked using epichlorohydrine.

5.  Use according to claim 1, **characterized in that** the irreversibly crosslinked cellulose derivative is a hydroxyethylcellulose derivative, a methylcellulose derivative, a methyl hydroxypropylcellulose derivative or a methyl hydroxyethylcellulose derivative.

6.  Process for the extrusion of construction material systems, **characterized by** extruding the construction material system with addition of an additive comprising an irreversibly crosslinked cellulose derivative.

7.  Process according to claim 6, **characterized in that** the irreversibly crosslinked cellulose derivative has gel-like rheological properties whereby solutions thereof in water, as well as using a solvent of 98 parts by weight of water and 2 parts by weight of sodium hydroxide per 100 parts by weight solvent, each comprising 1.5 to 2.0 parts by weight of cellulose ether per 100 parts by weight of solvent, have gel-like properties whereby particularly the linear viscoelastic material functions shear storage modulus G' and shear loss modulus G" of the solution at a temperature of 20°C +/- 1°C in the range of angular frequencies $\omega$ of 0.1 s$^{-1}$ to 1 s$^{-1}$ depend on the angular frequency so that exponents n and m of the relationship

    G' $\propto \omega^n$ (shear storage modulus is proportional to the angular frequency to the power n)

    and

    G" $\propto \omega^m$ (shear loss modulus is proportional to the angular frequency to the power m) are approximately equal whereby for the cellulose ether compositions according to the present invention the ratio of n to m is from 0.90 to 1.20.

8.  Process according to claim 6, **characterized in that** the irreversibly crosslinked cellulose derivatives having gel-like rheological properties are obtainable by:

    a) alkalizing cellulose with aqueous alkali metal hydroxide solution in the presence of a suspension medium,
    b) reacting the alkalized cellulose with one or more alkylene oxides,
    c) then reacting it with an alkyl halide present in the suspension medium,
    d) subsequently or simultaneously reacting the alkalized cellulose with a crosslinker in an amount of 0.0001 to 0.05 equivalents wherein the unit "eq" represents the molar ratio of the crosslinker relative to the anhydro glucose unit (AGU) of the cellulose used and
    e) after optionally further adding alkali metal hydroxide and/or alkylating agent separating off the resultant irreversibly crosslinked cellulose derivative from the reaction mixture, optionally purifying and drying it.

9.  Process according to claim 6, **characterized in that** the irreversibly crosslinked cellulose derivative was crosslinked using epichlorohydrine.

10. Process according to claim 6, **characterized in that** the irreversibly crosslinked cellulose derivative is a hydroxyethylcellulose derivative, a methylcellulose derivative, a methyl hydroxypropylcellulose derivative or a methyl hydroxyethylcellulose derivative.

11. Process according to any of claims 6 to 10, **characterized in that** the construction material system extruded is a cementitious mixture or a fibrous cementitious mixture.

**12.** Process according to any of claims 6 to 11, **characterized in that** the additive is added in an amount of 0.3 to 2.5 wt-%, based on the total mass of the dry materials.

**13.** Process according to any of claims 6 to 12, **characterized in that** the additive comprises irreversibly crosslinked cellulose derivatives in an amount of 10 to 100 wt-%.

**Revendications**

**1.** Utilisation des dérivés de cellulose réticulés irréversiblement comme additifs pour l'extrusion de systèmes de matériaux de construction.

**2.** Utilisation conformément à la revendication 1, **caractérisée en ce que** les dérivés de cellulose réticulés irréversiblement présentent des propriétés rhéologiques de type gel, dont les solutions aussi bien dans l'eau qu'en cas d'utilisation d'un solvant constitué de 98 parties en poids d'eau et de 2 parties en poids d'hydroxyde de sodium pour 100 parties en poids de solvant avec respectivement de 1,5 à 2,0 parties en poids d'éther de cellulose pour 100 parties en poids de solution présentent des propriétés de type gel, les paramètres définissant en particulier le comportement viscoélastique linéaire du matériau module de conservation G' et module de perte G" de la solution à une température de 20 °C +/-1°C dépendant notamment de la pulsation w quand elle se situe entre $0,1$ $s^{-1}$ et $1$ $s^{-1}$ de telle sorte que les exposants n et m des relations :

G' $\circledast$ $\omega^n$ (autrement dit, le module de conservation est proportionnel à la puissance n-ième de la pulsation) et

G" $\circledast$ $\omega^m$ (autrement dit, le module de perte est proportionnel à la puissance m-ième de la pulsation) sont à peu près égaux, le rapport de l'exposant n à l'exposant m étant de 0,90 à 1,20 dans le cas des compositions d'éther de cellulose conformément à la présente invention.

**3.** Utilisation conformément à la revendication 1, **caractérisée en ce que** les dérivés de cellulose réticulés irréversiblement avec des propriétés rhéologiques de type gel peuvent être obtenus :

a) en alcalinisant de la cellulose avec une solution aqueuse d'un hydroxyde alcalin en présence d'un agent de mise en suspension,
b) en faisant réagir la cellulose alcalinisée avec un ou plusieurs oxydes d'alkylène,
c) en la faisant ensuite réagir avec un halogénure d'alkyle compris dans l'agent de mise en suspension,
d) en faisant ensuite ou simultanément réagir la cellulose alcalinisée avec un agent de réticulation employé dans une quantité allant de 0,0001 à 0,05 éq (équivalent), sachant que cette unité « éq » désigne le rapport molaire de l'agent de réticulation au motif anhydroglucose (AG) de la cellulose mise en jeu, et
e) après avoir éventuellement ajouté un supplément d'hydroxyde alcalin et/ou d'agent d'alkylation, en séparant du mélange réactionnel le dérivé de cellulose réticulé irréversiblement obtenu, et si nécessaire en le purifiant et en le faisant sécher.

**4.** Utilisation conformément à la revendication 1, **caractérisée en ce que** les dérivés de cellulose réticulés irréversiblement ont été réticulés avec de l'épichlorhydrine.

**5.** Utilisation conformément à la revendication 1, **caractérisée en ce que** le dérivé de cellulose réticulé irréversiblement est un dérivé d'hydroxyéthylcellulose, dérivé de méthylcellulose, un dérivé de méthylhydroxypropylcellulose ou dérivé de méthylhydroxyéthylcellulose.

**6.** Procédé d'extrusion de systèmes de matériaux de construction, **caractérisé en ce que** l'on extrude le système de matériaux de construction par ajout d'un additif, ce dernier contenant un dérivé de cellulose réticulé irréversiblement.

**7.** Procédé conformément à la revendication 6, **caractérisé en ce que** le dérivé de cellulose réticulé irréversiblement présente des propriétés rhéologiques de type gel, dont les solutions aussi bien dans l'eau qu'en cas d'utilisation d'un solvant constitué de 98 parties en poids d'eau et de 2 parties en poids d'hydroxyde de sodium pour 100 parties en poids de solvant avec respectivement de 1,5 à 2,0 parties en poids d'éther de cellulose pour 100 parties en poids de solution présentent des propriétés de type gel, les paramètres définissant en particulier le comportement viscoélastique linéaire du matériau module de conservation G' et module de perte G" de la solution à une température de 20 °C +/- 1 °C dépendant notamment de la pulsation w quand elle se situe entre 0,1 s$^{-1}$ et 1 s$^{-1}$ de telle sorte que les exposants n et m des relations :

$$G' *_\oslash \omega^n \text{ (autrement dit, le module de conservation est proportionnel à la puissance n-ième de la pulsation)}$$

et G" $_\oslash \omega^m$ (autrement dit, le module de perte est proportionnel à la puissance m-ième de la pulsation) sont à peu près égaux, le rapport de l'exposant n à l'exposant m étant de 0,90 à 1,20 dans le cas des compositions d'éther de cellulose conformément à la présente invention.

8. Procédé conformément à la revendication 6, **caractérisé en ce que** le dérivé de cellulose réticulé irréversiblement avec des propriétés rhéologiques de type gel peut être obtenu :

a) en alcalinisant de la cellulose avec une solution aqueuse d'un hydroxyde alcalin en présence d'un agent de mise en suspension,
b) en faisant réagir la cellulose alcalinisée avec un ou plusieurs oxydes d'alkylène,
c) en la faisant ensuite réagir avec un halogénure d'alkyle compris dans l'agent de mise en suspension,
d) en faisant ensuite ou simultanément réagir la cellulose alcalinisée avec un agent de réticulation employé dans une quantité allant de 0,0001 à 0,05 éq (équivalent), sachant que cette unité « éq » désigne le rapport molaire de l'agent de réticulation au motif anhydroglucose (AG) de la cellulose mise en jeu, et
e) après avoir éventuellement ajouté un supplément d'hydroxyde alcalin et/ou d'agent d'alkylation, en séparant du mélange réactionnel le dérivé de cellulose réticulé irréversiblement obtenu, et si nécessaire en le purifiant et en le faisant sécher.

9. Procédé conformément à la revendication 6, **caractérisé en ce que** le dérivé de cellulose réticulé irréversiblement a été réticulé avec de l'épichlorhydrine.

10. Procédé conformément à la revendication 6, **caractérisé en ce que** le dérivé de cellulose réticulé irréversiblement est un dérivé d'hydroxyéthylcellulose, un dérivé de méthylcellulose, un dérivé de méthylhydroxypropylcellulose ou un dérivé de méthylhydroxyéthylcellulose.

11. Procédé conformément à l'une des revendications 6 à 10, **caractérisé en ce que** l'on extrude comme système de matériaux de construction un mélange cimentaire ou un mélange cimentaire contenant des fibres.

12. Procédé conformément à l'une des revendications 6 à 11, **caractérisé en ce que** l'on ajoute l'additif dans une quantité allant de 0,3 à 2,5 % en poids par rapport à la masse globale des matériaux secs.

13. Procédé conformément à l'une des revendications 6 à 12, **caractérisé en ce que** l'additif contient des dérivés de cellulose réticulés irréversiblement dans une quantité allant de 10 à 100 % en poids.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 514917 A
- US 4321367 A
- EP 1384727 A1
- JP 9249438 B

**In der Beschreibung aufgeführte Nicht-Patentliteratur**

- **C. L. SIEGLAFF.** Proposed Nomenclature for Steady Shear Flow and Linear Viscoelastic Behavior. *Transactions of the Society of Rheology,* 1976, vol. 20 (2), 311-317
- **N. SARKAR.** Kinetics of thermal gelation of methylcellulose and hydroxypropylmethylcellulose in aqueous solutions. *Carbohydrate Polymers,* 1995, vol. 26, 195-203
- **F. CHAMBON ; H. H., WINTER.** Linear Viscoelasticity at the Gel Point of a Crosslinking PDMS with Imbalanced Stoichometry. *Journal of Rheology,* 1987, vol. 31 (8), 683-697
- **G. BARTELMUS ; R. KETTERER.** *Z. Anal. Chem.,* 1977, vol. 286, 161-190